(19) Europäisches Patentamt
European Patent Office
Office européen des brevets

(11) **EP 3 548 533 B1**

(12) **EUROPÄISCHE PATENTSCHRIFT**

(45) Veröffentlichungstag und Bekanntmachung des Hinweises auf die Patenterteilung:
**05.10.2022 Patentblatt 2022/40**

(21) Anmeldenummer: **17807812.7**

(22) Anmeldetag: **24.11.2017**

(51) Internationale Patentklassifikation (IPC):
*C08G 18/76* (2006.01)     *C08G 18/48* (2006.01)
*C08G 18/50* (2006.01)     *C08J 9/12* (2006.01)
*C08J 9/14* (2006.01)      *C08G 101/00* (2006.01)

(52) Gemeinsame Patentklassifikation (CPC):
**C08G 18/7664; C08G 18/482; C08G 18/4825; C08G 18/4883; C08G 18/5027; C08J 9/141;** C08G 2110/0025; C08G 2110/005; C08J 2203/14; C08J 2203/182; C08J 2375/04

(86) Internationale Anmeldenummer:
**PCT/EP2017/080382**

(87) Internationale Veröffentlichungsnummer:
**WO 2018/099824 (07.06.2018 Gazette 2018/23)**

(54) **POLYURETHAN-HARTSCHAUMSTOFFE, EIN VERFAHREN ZU DEREN HERSTELLUNG UND DEREN VERWENDUNG**

POLYURETHANE HARD FOAMS, METHOD FOR THEIR MANUFACTURE AND APPLICATION THEREOF

MOUSSE RIGIDE DE POLYURÉTHANE, SON PROCÉDÉ DE FABRICATION ET D'UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2016 EP 16201120**
**12.12.2016 EP 16203396**

(43) Veröffentlichungstag der Anmeldung:
**09.10.2019 Patentblatt 2019/41**

(73) Patentinhaber: **Covestro Intellectual Property GmbH & Co. KG**
**51373 Leverkusen (DE)**

(72) Erfinder:
• **ALBERS, Reinhard**
  **51375 Leverkusen (DE)**
• **MARAZITA, Martin**
  **40764 Langenfeld (DE)**
• **OTTO, Frank**
  **40724 Hilden (DE)**

(74) Vertreter: **Levpat**
**c/o Covestro AG**
**Gebäude 4825**
**51365 Leverkusen (DE)**

(56) Entgegenhaltungen:
**DE-A1-102004 048 728     US-A1- 2012 264 842**

EP 3 548 533 B1

**Beschreibung**

Die vorliegende Erfindung betrifft Polyurethan (PUR) - Hartschaumstoffe, ein Verfahren zur Herstellung dieser Hartschaumstoffe durch Vergießen und deren Verwendung.

Mit der Bezeichnung PUR - Hartschaumstoffe bzw. PUR-Schaumstoffe sind im Folgenden auch solche Polyurethan-Schaumstoffe gemeint, welche teilweise Polyisocyanuratgruppen aufweisen.

PUR-Hartschaumstoffe verfügen über exzellente thermische und mechanische Eigenschaften. Aufgrund dieser Eigenschaft werden PUR-/PIR Schaumstoffe bei der Herstellung von wärme- und kälteisolierenden Bauteilen verwendet, wie z.B. in Kühlgeraten oder auch Fernwärmerohren.

Die PUR-Hartschaumstoffe können entweder durch kontinuierliche Verfahren, wie es für Metallpaneele oder Isolationsplatten der Fall ist, oder diskontinuierliche Verfahren, beispielsweise bei Kühlgeräten, Rohren oder diskontinuierlichen Paneelen, hergestellt werden.

Die Herstellung von PUR-Hartschaumstoffen erfolgt üblicherweise durch Umsetzung von Polyisocyanaten mit Verbindungen mit mindestens zwei mit Isocyanatgruppen reaktiven Wasserstoffatomen, zumeist einer Polyolkomponente, in Anwesenheit von Katalysatoren, Treibmitteln sowie Hilfs- und/oder Zusatzstoffen.

Im diskontinuierlichen Verfahren ist für die produzierende Industrie eine wesentliche Anforderung die Verkürzung der Entformzeit bei der Herstellung der Bauteile. Die unterschiedlichen Eigenschaften der PUR-Hartschaumstoffe werden zumeist durch Modifikation der Polyolkomponente eingestellt, so auch die Entformeigenschaften. Es ist bekannt, dass hohe Hydroxylzahlen und Funktionalitäten der Polyolkomponente die Entformeigenschaften positiv beeinflussen, jedoch besitzen solche Komponente hohe Viskositäten, so dass sie nur eingeschränkt in Formulierungen verwendet werden können.

WO 2006/037540 A offenbart beispielsweise ein Verfahren zur Herstellung von Polyurethan-Hartschaumstoffen durch Umsetzung von a) Polyisocyanaten mit einer Polyolkomponente, welche aus einem Gemisch aus b1) einem Polyetherpolyol mit einer Hydroxylzahl von 360 bis 450 mg KOH/g und einer Viskosität bei 25°C von größer 12000 mPa·s, herstellbar durch Anlagerung von Ethylenoxid und/oder Propylenoxid an TDA, b2) einem Polyetherpolyol mit einer Funktionalität von 5 bis 7,5 und einer Hydroxylzahl von 380 bis 480 mgKOH/g, herstellbar durch Anlagerung von Propylenoxid an Sorbit und/oder Saccharose, b3) einem Polyetherpolyol mit einer Funktionalität von 2 bis 4 und einer Hydroxylzahl von 140 bis 250 mg KOH/g, herstellbar durch Anlagerung von Ethylenoxid und Propylenoxid an TDA, von TDA verschiedene Amine oder von Propylenoxid an 2-, 3- oder 4-funktionelle Alkohole, oder Ricinusölderivate, hergestellt werden. Es wird behauptet, dass in einer bevorzugten Ausführungsform des Verfahrens das Polyisocyanat einen Anteil an 2-Kern MDI von 25 bis 38 Gew.-% und eine Viskosität von 250 bis 1000 mPa·s bei 25°C aufweist, und aus einer Mischung einer Komponente a1) mit einem NCO-Gehalt von 30 bis 32 Gew.-% und einer Viskosität von 2000 bis 2200 mPa·s bei 25°C sowie einer Komponente a2) mit einem NCO-Gehalt von 30 bis 32 Gew.-% und einer Viskosität von 100 bis 120 mPa-s bei 25°C besteht. Allerdings kann für diese bevorzugte Ausführungsform keine Verbesserung des Nachtriebs (als Maß für das Entformungsverhaltens) gezeigt werden, gemäß den Beispielen verbessert sich das Entformungsverhalten mehr oder weniger linear mit steigender Viskosität des Isocyanats (Beispiele 12 - 15), wobei in den Beispielen Isocyanate mit Viskositäten von 250 mPa·s, 803 mPa·s , 1050 mPa·s und 1602 mPa·s (25 °C) eingesetzt werden. Die hohen Viskositäten wiederum schränken die Verarbeitungseigenschaften (insbesondere die Fließfähigkeit) der Systeme ein.

US 2012/0264842 A offenbart die Herstellung von Schäumen für Verbundsysteme, bei denen bestimmte Polyolformulierungen in Kombination mit Lupranat® M50 der BASF SE eingesetzt werden. Aufgabe dieser Anmeldung ist es, Schäume für die kontinuierliche Herstellung von Formkörpern aus PUR-Hartschaumstoffen zur Verfügung zu stellen, welche über gute Oberflächeneigenschaften verfügen. Die Verbesserung der diskontinuierlichen Verarbeitung wird in dieser Veröffentlichung nicht thematisiert.

Ausgehend vom Stand der Technik besteht daher weiterhin die Aufgabe, ein Verfahren zur diskontinuierlichen Herstellung von Formkörpern aus PUR-Hartschaumstoffen zur Verfügung zu stellen, welches eine Verkürzung der Entformzeit der Formkörper erlaubt, ohne dass es zu Einschränkungen ihrer mechanischen Eigenschaften oder Verarbeitungseigenschaften (z.B. der Fließfähigkeit) kommt.

Überraschenderweise wurde nun gefunden, dass sich bei Verwendung von polymeren MDI in einem ganz bestimmten Viskositätsbereich in Verbindung mit einer speziellen Polyolkomponente im richtigen Mischungsverhältnis PUR-Hartschaumstoffe erhalten lassen, welche im Vergleich mit den heute üblicherweise verwendeten Systemen aus polymerem MDI mit einer Viskosität von maximal ca. 200 mPa·s (25°C) bzw. im Vergleich mit den im Stand der Technik offenbarten Systemen gleich gute Fließeigenschaften und mechanische Daten aufweisen, aber eine verbesserte Entformbarkeit im diskontinuierlichen Herstellverfahren zeigen.

Gegenstand der Erfindung sind PUR-Hartschaumstoffe erhältlich durch Umsetzung einer organischen Polyisocyanatkomponente B) mit einer gegenüber Isocyanatgruppen reaktive Wasserstoffatome enthaltenden Komponente A), mindestens enthaltend eine Polyolkomponente A1), Wasser A2) sowie gegebenenfalls Stabilisatoren A3), Katalysatoren A4) und sonstige Hilfs- und Zusatzmittel A5), in Gegenwart geeigneter Treibmittel T), wobei

- die Polyisocyanatkomponente B) mindestens 85 Gew.-% (bezogen auf das Gesamtgewicht von B) polymeres MDI enthält, welches einen NCO-Gehalt von $\geq$ 29,0 Gew.-% bis $\leq$ 32,0 Gew.-% und eine Viskosität bei 25°C (EN ISO 3219, Oktober 1994) von $\geq$ 300 mPas bis $\leq$ 750 mPa·s aufweist und zu $\geq$ 25 Gew.-% bis $\leq$ 40 Gew.-% (bezogen auf das polymere MDI) aus monomerem MDI besteht; und

- die Polyolkomponente A1) die folgenden Komponenten (i) - (iii) umfasst, bezogen auf das Gesamtgewicht von A1:

    (i) 60 - 75 Gew.-% Polyetherpolyol A1a) mit einer Hydroxylzahl von 300 mg KOH/g bis 600 mg KOH/g und einer Funktionalität von 3,0 bis 6,0, welches erhältlich ist durch Addition eines Epoxids an eine oder mehrere Starterverbindung(en) ausgewählt aus der Gruppe bestehend aus Kohlenhydraten und di- oder höherfunktionellen Alkoholen;

    (ii) 20 - 35 Gew.-% Polyetherpolyol A1b) mit einer Hydroxylzahl von 100 mg KOH/g bis 550 mg KOH/g und einer Funktionalität von 1,5 bis 5,0, welches erhältlich ist durch Addition eines Epoxids oder Epoxidgemischs an ein aromatisches Amin;

    (iii) 3 - 10 Gew.-% Polyetherpolyol A1c) mit einer Hydroxylzahl von 15 mg KOH/g bis < 300 mg KOH/g und mit einer Funktionalität von 1,5 bis 4,0, welches erhältlich ist durch Addition eines Epoxids oder Epoxidgemischs, an eine oder mehrere Starterverbindung(en) ausgewählt aus der Gruppe bestehend aus Kohlenhydraten und di- oder höherfunktionellen Alkoholen.

Ein Gemisch aus Polyolkomponente A1) sowie Wasser A2) und gegebenfalls Katalysatoren A4), Stabilisatoren A3) und sonstigen Hilfs- und Zusatzmitteln A5) wird im Folgenden als Komponente A bezeichnet.

Ein weiterer Gegenstand der Erfindung ist ein schaumbildendes Reaktionssystem enthaltend die oben beschriebene Polyisocyanatkomponente B), die Komponente A) sowie das Treibmittel T) und ein Verfahren zur Herstellung von geschäumten Formkörpern aus diesem Reaktionssystem, umfassend die Schritte:

    a) Bereitstellen einer Form und
    b) Einbringen des schaumbildenden Reaktionsgemisches aus Komponente A), Treibmittel T) und Polyisocyanatkomponente B) in die Form.

Als Hauptbestandteil der Polyisocyanatkomponente B) wird polymeres MDI (pMDI) eingesetzt. Unter polymeren MDI wird im allgemeinen eine Mischung aus den Isomeren des Diphenylmethandiisocyanats ("monomeres MDI" oder "mMDI") und dessen Oligomeren, d.h. den höherkernigen Homologen und Isomeren des MDI, welche mindestens 3 aromatische Kerne und eine Funktionalität von mindestens 3 aufweisen ("oligomeres MDI"), verstanden.

Der NCO-Gehalt beträgt von $\geq$ 29,0 Gew.-% bis $\leq$ 32,0 Gew.%, bezogen auf das Gesamtgewicht des polymeren MDI. Das polymere MDI weist eine Viskosität bei 25°C von $\geq$ 300 mPas bis $\leq$ 750 mPa·s, bevorzugt von 320 - 650 mPa·s und besonders bevorzugt von 350 - 550 mPa·s (EN ISO 3219, Oktober 1994) und ganz besonders bevorzugt von 350 - 500 mPa·s (EN ISO 3219, Oktober 1994) auf. Das polymere MDI besteht, bezogen auf sein Gesamtgewicht, zu $\geq$ 25 Gew.-% bis $\leq$ 40 Gew.-% aus monomerem MDI.

Bevorzugt enthält die Polyisocyanatkomponente, $\geq$ 25 Gew.-% bis $\leq$ 40 Gew.-% monomeres MDI und $\geq$ 50 Gew.-% bis $\leq$ 75 Gew.-% oligomeres MDI, bezogen auf das Gesamtgewicht der Komponente B, wobei die Summe der Anteile aus monomeren und oligomeren MDI $\leq$ 100 Gew.- % bezogen auf das Gesamtgewicht der Isocyanatkomponente beträgt.

Neben den Polyphenylmethanpolyisocyanaten können < 25 Gew.-%, in anderen Ausführungsformen bevorzugt < 15 Gew.-% und besonders bevorzugt < 10 Gew.-%, insbesondere < 5 Gew.-% an weiteren, für die Herstellung von Polyurethanen bekannten aliphatischen, cycloaliphatischen und insbesondere aromatischen Polyisocyanaten, besonders bevorzugt Toluylendiisocyanat (TDI), zum Einsatz kommen.

In einer bevorzugten Ausführungsform besteht die Polyisocyanatkomponente B) bis auf technisch unvermeidbare Spuren von Verunreinigungen nur aus polymeren MDI.

Die Schaumstoffe werden bevorzugt bei einem Index von $\geq$ 95 und $\leq$ 180, bevorzugt von $\geq$ 100 und $\leq$ 150, mehr bevorzugt von $\geq$ 102 und $\leq$ 135 sowie besonders bevorzugt von $\geq$ 105 und $\leq$ 125 hergestellt. Unter "Index" (oder auch "Kennzahl" wird hierbei der Quotient aus im Reaktionssystem eingesetzten NCO (Isocyanat-) Gruppen [mol] geteilt durch die im Reaktionssystem vorhandenen NCO-reaktiven Gruppen [mol], multipliziert mit 100, verstanden. Daraus ergibt sich:

$$Index = (mol\ NCO\ Gruppen\ /\ mol\ NCO\text{-reaktive Gruppen}) \times 100$$

Die Polyolkomponente A1) enthält 60 - 75 Gew.-% an A1a) (bezogen auf das Gesamtgewicht der Komponente A1), besonders bevorzugt 65 - 75 Gew.-% an A1a) an Polyetherpolyol mit einer Hydroxylzahl von 300 mg KOH/g bis 600 mg KOH/g, bevorzugt von 350 mg KOH/g bis 550 mg KOH/g, besonders bevorzugt von 400 mg KOH/g bis 500 mg KOH/g und mit einer Funktionalität von 3,0 bis 6,0, bevorzugt von 3,5 bis 5,5, besonders bevorzugt von 4,5 bis 5,5, bezogen auf die isocyanatreaktiven Gruppen. Polyetherpolyole A1a) werden erhalten durch Addition eines oder mehrerer Epoxide, bevorzugt von Ethylenoxid und/oder Propylenoxid, an eine oder mehrere Starterverbindung(en) ausgewählt aus der Gruppe bestehend aus Kohlenhydraten und di- oder höherfunktionellen Alkoholen. Im Sinne dieser Anmeldung können mit "Epoxide" auch Gemische verschiedener Epoxidverbindungen gemeint sein. Bevorzugt enthalten die Epoxide > 50 Gew.-% Propylenoxid, bezogen auf das Gesamtgewicht der Epoxide, insbesondere > 85 Gew.-% Propylenoxid und ganz besonders bevorzugt > 99 Gew.-% Propylenoxid. Ein hoher Propylenoxid-Anteil im Epoxidgemisch beeinflusst die Reaktivität des Polyetherpolyols in günstiger Weise. Als Starterkomponenten sind di- oder höherfunktionelle Alkohole mit vicinalen Hydroxylgruppen bevorzugt. Insbesondere bevorzugt sind Starterverbindung(en) ausgewählt aus der Gruppe bestehend aus Gemischen von Saccharose und Propylenglykol, von Saccharose und Ethylenglykol, von Saccharose, Propylenglykol und Ethylenglykol, von Saccharose und Glycerin, von Sorbit und Propylenglykol, von Sorbit und Ethylenglykol, von Sorbit, Propylenglykol und Ethylenglykol, von Sorbit und Glyzerin, sowie aus Mischungen dieser Gemische. Diese bevorzugten Startergemische haben einen positiven Effekt auf die Druckfestigkeit und Stabilität der Schäume.

Die Polyolkomponente A1) enthält weiterhin 15 - 35 Gew.-% A1b), bevorzugt 15-30 Gew.-% und besonders bevorzugt 18-30 Gew.-% (bezogen auf das Gesamtgewicht der Komponente A1) an Polyetherpolyol mit einer Hydroxylzahl von 100 mg KOH/g bis 550 mg KOH/g, bevorzugt von 200 mg KOH/g bis 500 mg KOH/g, besonders bevorzugt von 350 mg KOH/g bis 470 mg KOH/g und einer Funktionalität von 1,5 bis 5,0, bevorzugt von 2,0 bis 4,5, besonders bevorzugt von 2,5 bis 4,0. Die Polyetherpolyole A1b) sind erhältlich durch Addition von Epoxiden, bevorzugt von Ethylenoxid und/oder Propylenoxid, an ein aromatisches Amin. Bevorzugt enthalten die Epoxide > 50 Gew.-% Propylenoxid, bezogen auf das Gesamtgewicht der Epoxide, insbesondere > 85 Gew.- % Propylenoxid und ganz besonders bevorzugt > 99 Gew.-% Propylenoxid. Besonders bevorzugt ist das Polyetherpolyol A1b auf ortho- , meta- und/oder para-Toluylendiamin gestartet, insbesondere auf ortho-Toluylendiamin oder auf einem Gemisch der isomeren Toluylendiamine. Das insbesondere zu verwendende ortho-Toluylendiamin enthält bevorzugt zwischen 40 und 50 Gew.-% 2,3-Diaminotoluol und zwischen 50 und 60 Gew.-% 3,4-Diaminotoluol, jeweils bezogen auf die Gesamtmasse des eingesetzten ortho-Toluylendiamins.

Die Polyolkomponente A1) enthält weiterhin 3 - 10 Gew.-%, bevorzugt 4 - 9 Gew.-%, besonders bevorzugt 4 - 7 Gew.-% (bezogen auf das Gesamtgewicht der Komponente A1) A1c) an Polyetherpolyol mit einer Hydroxylzahl von 15 mg KOH/g bis < 300 mg KOH/g, bevorzugt von 50 mg KOH/g bis 250 mg KOH/g, besonders bevorzugt von 75 mg KOH/g bis 200 mg KOH/g und mit einer Funktionalität von 1,5 bis 4,0, bevorzugt von 2,0 bis 3,5, besonders bevorzugt von 2,0 bis 3,0. A1c) wird erhalten durch Addition eines oder mehrerer Epoxide, bevorzugt von Ethylenoxid und/oder Propylenoxid an eine oder mehrere Starterverbindung(en) ausgewählt aus der Gruppe bestehend aus Kohlenhydraten und di- oder höherfunktionellen Alkoholen. Bevorzugt enthalten die Epoxide > 50 Gew.-% Propylenoxid, bezogen auf das Gesamtgewicht der Epoxide, insbesondere > 85 Gew.-% Propylenoxid und ganz besonders bevorzugt > 99 Gew.-% Propylenoxid. Als Starterkomponenten sind di- oder höherfunktionelle Alkohole mit vicinalen Hydroxylgruppen bevorzugt. Insbesondere bevorzugt sind Starterverbindung(en) ausgewählt aus der Gruppe bestehend aus Glycerin, Mischungen aus Glycerin und Propylenglykol, Trimethylolpropan, Mischungen aus Trimethylolpropan und Propylenglykol, oder Propylenglykol sowie aus Mischungen dieser Komponenten.

In bestimmten Ausführungsformen kann die Polyolkomponente A1) < 22 Gew.-% bevorzugt <10 Gew.-% und ganz besonders bevorzugt ≤ 5 Gew.-% (bezogen auf das Gesamtgewicht der Komponente A), noch (iv) weitere Isocyanatreaktive Verbindungen A1d) enthalten.

Bei A1d) handelt es sich unter anderem um dem Fachmann grundsätzlich bekannte Polyole handeln, wie aa) Polyesterpolyole, bb) Polyesterpolyetherpolyole und cc) Polyetherpolyole, welche nicht unter die Definition von A1a), A1b) oder A1c) fallen. Die Herstellungsverfahren solcher Polyole sind in der Literatur vielfach beschrieben. So können Polyesterpolyole durch Polykondensation von Dicarbonsäureäquivalenten und niedermolekularen Polyolen erhalten werden. Polyetherpolyole werden durch Polyaddition (anionisch oder kationisch) von Epoxiden an geeignete Starterverbindungen erhalten. Die Addition von Epoxiden an Polyesterpolyole oder die Veresterung von Dicarbonsäureäquivalenten und Polyetherpolyolen führt zu Polyesterpolyetherpoylolen. Erforderlichenfalls werden die Polymerisierungsreaktionen in Gegenwart geeigneter, dem Fachmann bekannter Katalysatoren durchgeführt.

Insbesondere kann cc) ein kurzkettiges auf einem aliphatischen Amin oder einem mehrwertigen Alkohol gestartetes Polyetherpolyol mit einer Hydroxylzahl von 500 mg KOH/g bis 1000 mg KOH/g, bevorzugt von 600 mg KOH/g bis 950 mg KOH/g, besonders bevorzugt 700 mg KOH/g bis 900 mg KOH/g und mit einer Funktionalität von 1,5 bis 5,0, bevorzugt von 2,0 bis 4,5, besonders bevorzugt von 2,5 bis 4,0, anwesend sein. Besonders bevorzugt wird dieses Polyetherpolyol durch Addition von Epoxiden an Ethylendiamin oder Trimethylolpropan erhalten. Bevorzugte Epoxide sind Ethylenoxid und Propylenoxid, besonders bevorzugt ist Propylenoxid.

Auch kann es günstig sein, dass A1d) noch dd) einen oder mehrere di- bis tetrafunktionelle aminische und/oder alkoholische Kettenverlängerer oder Vernetzer enthalten. Diese werden bevorzugt ausgewählt aus Glyzerin, Butandiol, Ethylenglykol, Diethylenglykol, Propylenglykol, Ethylendiamin, Ethanolamin, Triethanolamin, Trimethylolpropan und Pentaerythrit und liegen bevorzugt in Mengen von 0 bis 5 Gew.-%, bezogen auf Komponente A1) vor.

In der Polyolmischung A1) bzw. in A1d) können ebenfalls auch ee) Polyethercarbonatpolyole wie sie beispielsweise durch katalytische Umsetzung von Epoxiden und Kohlendioxid in Anwesenheit von H-funktionellen Startersubstanzen erhältlich sind (siehe z. B. EP 2 046 861 A1), zusätzlich eingesetzt werden. Diese Polyethercarbonatpolyole haben im Allgemeinen eine Funktionalität von größer als oder gleich 1,0, bevorzugt von 2,0 bis 8,0, besonders bevorzugt von 2,0 bis 7,0 und ganz besonders bevorzugt von 2,0 bis 6,0. Die zahlengemittelte Molmasse beträgt bevorzugt 400 g/mol bis 10000 g/mol und besonders bevorzugt 500 g/mol bis 6000 g/mol.

Die zahlengemittelte Molmasse $M_n$ wird im Rahmen dieser Erfindung bestimmt durch Gelpermeationschromatographie nach DIN 55672-1 vom August 2007.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2 (1998).

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül)

Im Sinne dieser Anmeldung sind mit der Bezeichnung "Polyetherpolyol" sowohl einzelne Verbindungen als auch Gemische aus Polyetherpolyolen mit den jeweils genannten Merkmalen gemeint.

Die Isocyanat-reaktive Komponente A) enthält Wasser A2), welches als Co-Treibmittel fungiert, bevorzugt in einer Menge von ≥ 1,5 Gew.-% bis ≤ 4,0 Gew.-%, bevorzugt von ≥ 2,0 Gew.-% bis ≤ 3,0 Gew.-%, besonders bevorzugt von ≥ 2,2 Gew.-% bis ≤ 2,7 Gew.-%, (bezogen auf das Gesamtgewicht der Komponente A).

Als Schaumstabilisatoren A3), die optional der Komponente A) zugesetzt werden können, kommen vor allem Polyethersiloxane in Frage. Diese Verbindungen sind im Allgemeinen so aufgebaut, dass ein Copolymerisat aus Ethylenoxid und Propylenoxid mit einem Polydimethylsiloxanrest verbunden ist. Diese Stabilisatoren werden üblicherweise in Mengen von 0,5 Gew.-% bis 5 Gew.-%, bevorzugt von 1,0 Gew.-% bis 4 Gew.-%, besonders bevorzugt 1,5 Gew.-% bis 3,0 Gew.-%, bezogen auf Komponente A eingesetzt.

Der Komponente A) werden in der Polyurethanchemie übliche Katalysatoren A4) zugesetzt. Die zur Herstellung eines PUR-Hartschaumstoffs nötigen aminischen Katalysatoren werden bevorzugt in Mengen von 0,05 bis 4 Gew.-%, bezogen auf die Komponente A, sowie die als Trimerisationskatalysatoren eingesetzten Salze werden üblicherweise in Mengen von 0,1 bis 5 Gew.-% eingesetzt.

Als Katalysatoren A4) werden beispielsweise eingesetzt:

Triethylendiamin, N,N-Dimethylcyclohexylamin, Dicyclohexylmethylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Tris-(dimethylaminopropyl)amin, Tris(dimethylaminomethyl)phenol, Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, Natrium-N-[(2-hydroxy-5-nonylphenyl)methyl]-N-methyl-aminoacetat, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, Bis[2-(*N,N*-dimethylamino)ethyl] ether

erforderlichenfalls (sofern hohe Polyisocyanuratanteile gewünscht sind) zusammen mit wenigstens einem Katalysator ausgewählt aus der Gruppe

Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Natriumoctoat, Kaliumacetat, Kaliumoctoat, Natriumhydroxid.

Bevorzugt enthält der Katalysator einen oder mehrere Katalysatoren ausgewählt aus der Gruppe bestehend aus Kaliumacetat, Kaliumoktoat, Pentamethyldiethylentriamin, N,N',N"-Tris-(dimethylaminopropyl)hexahydrotriazin, Tris(dimethylaminomethyl)phenol, Bis[2-(*N,N*-dimethylamino)ethyl] ether und N,N-Dimethylcyclohexylamin, besonders bevorzugt aus Pentamethyldiethylentriamin, N,N',N"-Tris-(dimethylaminopropyl)hexahydrotriazin und N,N-Dimethylcyclohexylamin,

Der Polyolkomponente können Flammschutzmittel zugesetzt werden, besonders bevorzugt in einer Menge von 0 bis 10 Gew.-%, bezogen auf die Komponente A). Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise brom- und chlorhaltige Paraffine oder Phosphorverbindungen, wie zum Beispiel die Ester der Orthophosphorsäure und der Metaphosphorsäure, die ebenfalls Halogen enthalten können, sein. Beispiele sind Triethylphosphat, Diethylethanphosphonat, Kresyldiphenylphosphat, Dimethylpropanphosphonat und Tris($\beta$-chlorisopropyl)phosphat. Bevorzugt werden bei Raumtemperatur flüssige Flammschutzmittel gewählt. Um bestimmte Eigenschaftsprofile (Viskosität, Sprödigkeit, Brennbarkeit, Halogengehalt etc.) zu erzielen, kann es auch günstig sein, unterschiedliche Flammschutzmittel miteinander zu kombinieren.

Zur Beeinflussung des Lambdaalterungsverhaltens, zur Verbesserung des Flammverhaltens und weiterer mechanischer Eigenschaften können der Polyolkomponente feste Additive, wie z.B. Nanoteilchen, Kalk, Mineralien, Pigmente, Graphit, zugesetzt werden. Weitere Beispiele von gegebenenfalls in der erfindungsgemäßen Polyolformulierung mitzuverwendenden festen Additiven sind literaturbekannt. Die Mengen liegen im Bereich von 0 bis 30 Gew.-%, bezogen auf Komponente A.

Die Reaktionsmischung enthält weiterhin so viel Treibmittel T), wie zur Erzielung einer dimensionsstabilen Schaummatrix und der gewünschten Rohdichte nötig ist. In der Regel sind dies 0,5 - 20 Gewichtsteile Treibmittel T bezogen auf 100 Gewichtsteile der Komponente A. Als Treibmittel T werden vorzugsweise physikalische Treibmittel ausgewählt aus wenigstens einem Mitglied der Gruppe bestehend aus Kohlenwasserstoffen, halogenierten Ethern und perfluorierten Kohlenwasserstoffen mit 1 bis 8 Kohlenstoffatomen eingesetzt. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Isocyanatkomponente reagieren. Bevorzugt sind die erfindungsgemäß einzusetzenden physikalischen Treibmittel ausgewählt aus Kohlenwasserstoffen (z. B. n-Pentan, iso-Pentan, cycloPentan, Butan, Isobutan), Ethern (z. B. Methylal), halogenierten Ethern, perfluorierte Kohlenwasserstoffe mit 1 bis 8 Kohlenstoffatomen (z. B. Perfluorhexan), sowie deren Gemischen untereinander. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). In besonders bevorzugten Ausführungsformen wird als Treibmittel T ein Pentanisomer oder ein Gemisch verschiedener Pentanisomeren eingesetzt. Außerordentlich besonders bevorzugt wird Cyclopentan als Treibmittel T eingesetzt. Weitere Beispiele für bevorzugt eingesetzte Fluorkohlenwasserstoffe sind z.B. HFC 245fa (1,1,1,3,3-Pentafluorpropan), HFC 365mfc (1,1,1,3,3-Pentafluorbutan), HFC 134a oder deren Mischungen verwendet. Es können auch verschiedene Treibmittelklassen kombiniert werden, z.B. können Gemische aus Kohlenwasserstoffen, insbesondere verschiedener Pentanisomeren, mit Fluorokohlenwasserstoffen kombiniert werden. So lassen sich z.B. mit Mischungen von n- oder i-Pentan mit HFC 245fa im Verhältnis 75:25 (n-/i-Pentan:HFC 245fa) Wärmeleitfähigkeiten, gemessen bei 10°C, von weniger als 20 mW/mK erzielen. Besonders bevorzugt wird Cyclopentan als Treibmittel T eingesetzt.

Ein weiterer Gegenstand der Erfindung ist ein schaumbildendes Reaktionssystem enthaltend die oben beschriebene Polyisocyanatkomponente B) und die oben beschriebene Komponente A) sowie ein Verfahren zur Herstellung von geschäumten Formkörpern aus PUR-Hartschaumstoffen, umfassend die Schritte:

a) Bereitstellen einer Form und

b) Einbringen des schaumbildenden Reaktionsgemisches aus Komponente A), Polyisocyanatkomponente B) und Treibmittel T) in die Form.

Der Einsatz des erfindungsgemäßen Reaktionssystems in diesem Verfahren führt, bei insgesamt sehr guten Verarbeitungseigenschaften, insbesondere zu einer guten Maßhaltigkeit (Quellverhalten) des Schaumes bei der Verarbeitung. Das Quellverhalten ist entscheidend für die Zeit, nach der ein Formkörper entformt werden kann (Entformbarkeit). Die erfindungsgemäßen Hartschaumstoffe zeichnen sich durch ein gutes Eigenschaftsprofil aus, insbesondere auch durch niedrige Wärmeleitfähigkeitswerte.

Die Herstellung der erfindungsgemäßen PUR-Hartschaumstoffe erfolgt nach dem Fachmann bekannten Verfahren, bei dem die Reaktionskomponenten zur Reaktion gebracht werden.

Bei der in Schritt a) des erfindungsgemäßen Verfahrens bereitgestellten Form kann es sich um eine geschlossene oder eine offene Form handeln. "Offen" bedeutet hierbei, dass mindestens zwei Seitenwände vorhanden sind. Der erhaltene Schaum kann aus der Form entnommen werden oder für seine Endbestimmung in der Form verbleiben. Erfindungsgemäß besonders geeignet ist eine Form, mit der einstückige Isolierungen von Kühlgeräten hergestellt werden. Vorzugsweise wird die Form so angeordnet, dass das in sie eingebrachte Reaktionsgemisch sich auf ihrem Boden verteilen kann.

Das schaumbildende Reaktionsgemisch kann in Schritt b) beispielsweise mittels einer üblichen Hochdruck-Mischanlage hergestellt und mittels eines Austragsrohres in die Form eingebracht werden. Die Mischanlage kann eine Mischkammer umfassen, der die einzelnen Komponenten des Reaktionsgemischs zugeführt werden.

Ein Beispiel für ein konventionelles Verfahren zur Herstellung von Isolierungen für Kühlgeräte ist die Befüllung der Form in Wannenlage, bei der das Gerät auf der Rückwand liegend entweder von der Kompressorstufe oder dem Top-Bereich befüllt wird. Ein solches Verfahren ist beispielsweise in der EP 2 148 156 A beschrieben. Ein weiteres Beispiel für ein weiterentwickeltes konventionelles Verfahren ist das "Top Flow"-Verfahren, bei dem in einer Form das Reaktionsgemisch von unten kommend eingetragen wird und sich so auf dem Boden der Form ausbreiten kann.

Es kann für eine bessere Verteilung vorteilhaft sein, das schaumbildende Reaktionsgemisch unter variablem Injektionsdruck und / oder in zeitlich veränderlicher Menge in die Form einzubringen, wie es beispielsweise in der EP 2 844 394 A beschrieben ist. Es können pro Form ein Austragsrohr oder aber auch mehrere Austragsrohre (Mehrpunktinjektion) eingesetzt werden.

Bereits während oder anschließend an den Schritt b) findet c) die Schaumbildung aus dem schaumbildenden Reaktionsgemisch statt.

Es kann für eine bessere Verteilung des Reaktionsgemisches und/oder für eine kontrollierte Schaumbildung auch vorteilhaft sein, den Einfüllprozess und/oder die Schaumbildung unter Vakuum durchzuführen. Beim diesem vakuumunterstützten Schäumen wird die Reaktionsmischung in eine Schaumform eingebracht, wobei in der Schaumform vor, während oder nach dem Einbringen der Reaktionsmischung ein Unterdruck erzeugt wird.

Nach beendeter Schaumbildung wird das Gemisch zur Aushärtung gebracht und entformt.

Das erfindungsgemäße Verfahren ermöglicht dem Verarbeiter die diskontinuierliche Herstellung von Formkörpern aus PUR-Hartschaumstoffen mit einer gegenüber dem Standardverfahren verkürzten Entformzeit der Formkörper, ohne dass es zu Einschränkungen ihrer mechanischen Eigenschaften oder Verarbeitungseigenschaften (z.B. der Fließfähigkeit) kommt.

Ein weiterer Gegenstand der vorliegenden Erfindung sind Verbundsysteme enthaltend die Formkörper aus den erfindungsgemäßen PUR-Hartschaumstoffen, erhältlich nach dem zuvor beschriebenen erfindungsgemäßen Verfahren. Die Verbundsysteme sind oft sowohl an der Oberals auch an der Unterseite durch Dekorschichten begrenzt. Als Dekorschichten kommen unter anderem Metalle, Kunststoffe, Holz und Papier in Frage. Als Anwendungsgebiete solcher diskontinuierlich hergestellten PUR-Verbundsysteme sind insbesondere zu nennen die technische Isolierung von Geräten wie Kühlschränken, Kühltruhen, Kühlgefrierkombinationen und Boilern, Kühlcontainern und Kühlboxen sowie von Rohren.

Der Einsatz von PUR-Hartschaumstoffen auf diesen Gebieten ist dem Fachmann grundsätzlich bekannt und wurde schon vielfach beschrieben. Die erfindungsgemäßen PUR-Hartschaumstoffe eignen sich außerordentlich gut für diese Zwecke, da sie sich durch geringe Wärmeleitzahlen auszeichnen, ohne dass in der Herstellung der Schäume bzw. deren Applikation auf geeignete Substrate (wie z. B. Gehäuse von Kühlgeräten oder Rohren) Verarbeitungsprobleme durch zu hohe Viskositäten oder ein ungünstiges Quellverhalten zu befürchten wären.

Die Erfindung betrifft zudem einen Kühlschrank, einen Gefrierschrank oder eine Kühl-Gefrierkombination, umfassend einen erfindungsgemäß erhältlichen geschäumten Formkörper, wobei die bereitgestellte Form insbesondere ein Gehäuseteil des Kühlschranks, des Gefrierschranks oder der Kühl-Gefrierkombination ist. Die Erfindung soll anhand der nachfolgenden Beispiele näher erläutert werden.

**Beispiele**

Ausgangsprodukte:

Polyol PA: Polyetherpolyol aus Saccharose, Propylenglykol, Ethylenglykol und Propylenoxid mit einer Funktionalität von 4,7 und einer Hydroxylzahl von 450 mg KOH/g.

Polyol PB: Polyetherpolyol aus Sorbitol, Glyzerin und Propylenoxid mit einer Funktionalität von 5,5 und einer Hydroxylzahl von 477 mg KOH/g.

Polyol PC: Polyetherpolyol aus TDA und Propylenoxid mit einer Funktionalität von 4 und einer Hydroxylzahl von 360 mg KOH/g.

Polyol PD: Polyetherpolyol aus Propylenglykol und Propylenoxid mit einer Funktionalität von 2 und einer Hydroxylzahl von 112 mg KOH/g.

Stabilisator: Tegostab® B 8522, Evonik Nutrition & Care GmbH

Katalysator KA: Pentamethyldiethylentriamin

Katalysator KB: N,N',N"-Tris-(dimethylaminopropyl)hexahydrotriazin

Katalysator KC: Tris(dimethylaminomethyl)phenol

Katalysator KD: N,N-Dimethylcyclohexylamin

Katalysator KE: Mischung aus Ethandiol und dem Salz aus N,N,N-Methanaminium und Pivalinsäure (50 Gewichtsteile : 50 Gewichtsteile)

Isocyanat IA: polymeres MDI enthaltend 49,5 Gew.-% Diphenylmethan-4,4'-diisocyanat (mMDI), Viskosität von $\geq$ 160 mPas bis $\leq$ 300 mPas bei 25°C, NCO- Gehalt 31,3 % Gew.-%, Covestro Deutschland AG

Isocyanat IB: polymeres MDI enthaltend 35,2 Gew.-% Diphenylmethan-4,4'-diisocyanat (mMDI), Viskosität von $\geq$ 350 mPas bis $\leq$ 450 mPas bei 25°C, NCO- Gehalt 31,1% Gew.-%, Covestro Deutschland AG

Isocyanat IC: polymeres MDI enthaltend 30,6 Gew.-% Diphenylmethan-4,4'-diisocyanat (mMDI), Viskosität von $\geq$ 610 mPas bis $\leq$ 750 mPas bei 25°C, NCO- Gehalt 30,9 % Gew.-%, Covestro Deutschland AG

Isocyanat ID: polymeres MDI enthaltend 22,8 Gew.-% Diphenylmethan-4,4'-diisocyanat (mMDI), Viskosität von $\geq$ 1500 mPas bis $\leq$ 2500 mPas bei 25°C, NCO- Gehalt 29,0-32,0 Gew.-%, Covestro Deutschland AG

Hydroxylzahl (OH-Zahl): die Bestimmung der OH-Zahl erfolgte gemäß der Vorschrift der DIN 53240-2 (1998).

Isocyanatgehalt: EN ISO 11909:2007 "Bestimmung des Isocyanat-Gehaltes"

Viskosität: DIN EN ISO 3219:1994 "Kunststoffe - Polymere/Harze in flüssigem, emulgiertem oder dispergiertem Zustand"

**Versuche 1 - 6 (Tabelle 1):**

Auf einer Polyurethan Hochdruckdosiermaschine der Fa. Cannon des Typs A40 wurde die Polyolformulierung aus den in Tabelle 1 genannten Mengen an Polyolen, Wasser, Stabilisator, Katalysatoren zusammen mit dem Treibmittel auf einem FPL- Mischkopf (Fa. Cannon) mit einem Auslaufrohrdurchmesser von 18 mm mit dem Isocyanat gemischt und ausgetragen. Der Kreislaufdruck für die Komponenten wurde auf ungefähr 150 bar und die Behältertemperaturen der Komponenten auf 20°C geregelt. Die Austragsmenge des Gemisches wurde auf 350 g/s eingestellt.

Die Wärmeleitfähigkeit wurde nach DIN 52616 (1977) bestimmt. Hierzu wurde das Polyurethan-Reaktionsgemisch in eine $200 \times 20 \times 5$ cm große Form, mit einer Einfüllrohdichte von 37 kg/m$^3$, gegossen. Nach 6 Minuten wurde der Probekörper entformt und zeitnah zwei Probekörper der Maße $20 \times 20 \times 3$ cm aus der Form geschnitten.

Die Druckfestigkeit wurde nach DIN EN 826 (2013) bestimmt. Hierzu wurde in eine $200 \times 20 \times 5$ cm große Form das Polyurethan-Reaktionsgemisch, mit einer Einfüllrohdichte von 36 kg/m$^3$, gegossen. Nach 5 Minuten wurde der Probekörper entformt und nach 24h Lagerung werden 20 Probekörper aus unterschiedlichen Regionen des Probekörpers mit der Größe von $5 \times 5 \times 4$ cm geschnitten und die Druckfestigkeit entsprechend der angegeben DIN-Norm bestimmt.

Für die Bestimmung des Quellverhaltens wurde das Polyurethan-Reaktionsgemisch in eine auf 45°C vorgeheizte Form mit den Dimensionen $70 \times 40 \times 9$ cm mit einer Rohdichte von 36 kg/m$^3$ gefüllt und nach 5 Minuten entformt. Der Probekörper wurde für 24h gelagert und anschließend die Dicke des Probekörpers bestimmt.

Die Kernrohdichte wurde bestimmt nach DIN EN ISO 845:2009 ("Schaumstoffe aus Kautschuk und Kunststoffen - Bestimmung der Rohdichte").

**Tabelle 1:**

|  | 1* | 2* | 3* | 4 | 5 | 6 |
|---|---|---|---|---|---|---|
| Polyolformulierung (Gewichtsteile) | | | | | | |
| Polyol PA | 32,5 |  | 32,5 | 32,5 |  | 32,5 |
| Polyol PB | 32,5 | 65,0 | 32,5 | 32,5 | 65,0 | 32,5 |
| Polyol PC | 30,0 | 30,0 | 30,0 | 30,0 | 30,0 | 30,0 |

(fortgesetzt)

|  | 1* | 2* | 3* | 4 | 5 | 6 |
|---|---|---|---|---|---|---|
| Polyolformulierung (Gewichtsteile) | | | | | | |
| Polyol PD | 5,0 | 5,0 | 5,0 | 5,0 | 5,0 | 5,0 |
| Wasser | 2,65 | 2,65 | 2,65 | 2,65 | 2,65 | 2,65 |
| Stabilisator | 2,0 | 2,0 | 2,0 | 2,0 | 2,0 | 2,0 |
| Katalysator KA | 0,6 | 0,6 | 0,6 | 0,6 | 0,6 | 0,6 |
| Katalysator KB | 0,5 | 0,5 |  | 0,5 | 0,5 |  |
| Katalysator KC | 0,4 | 0,4 |  | 0,4 | 0,4 |  |
| Katalysator KD | 0,85 | 0,85 | 0,85 | 0,85 | 0,85 | 0,85 |
| Katalysator KE |  |  | 0,8 |  |  | 0,8 |
|  | | | | | | |
| Reaktionssystem (Gewichtsteile) | | | | | | |
| Pol yolformulierung | 100 | 100 | 100 | 100 | 100 | 100 |
| Cyclopentan | 14 | 14 | 14 | 14 | 14 | 14 |
| Isocyanat IA | 149 | 151 | 150 |  |  |  |
| Isocyanat IB |  |  |  | 149 | 151 | 149 |
| Kennzahl | 113 | 113 | 113 | 112 | 112 | 112 |
| Eigenschaften | | | | | | |
| Abbindezeit [s] | 38 | 39 | 44 | 36 | 42 | 46 |
| Freie Rohdichte [g/l] | 23,3 | 22,9 | 22,3 | 22,8 | 23,7 | 23,1 |
| Min. Fülldichte [g/l] | 31,8 | 30,9 | 30,9 | 32,0 | 32,2 | 31,8 |
| Druckfestigkeit 36 kg/m$^3$ [kPa] | 159 | 170 | 165 | 162 | 163 | 154 |
| Kernrohdichte 36 kg/m$^3$ | 31,7 | 32,1 | 31,8 | 31,5 | 31,7 | 31,7 |
| Wärmeleitfähigkeit [mW/mK] 10°C | 19,2 | 19,1 | 19,4 | 19,1 | 19,1 | 19,2 |
| Quellverhalten nach 24 h, 5' 36 kg/m$^3$ [mm] | 91,5 | 91,6 | 91,8 | 90,7 | 90,7 | 91,0 |
| * Vergleichsbeispiele | | | | | | |

**Versuche 7 - 10 (Tabelle 2):**

In einem geeignetem Gefäß werden insgesamt 100g der Polyolformulierung aus den in Tabelle 2 genannten Mengen an Polyolen, Wasser, Stabilisator, Katalysatoren mit Cyclopentan versetzt und auf 20°C temperiert. Gleichzeitig wurde in einem zweiten geeignetem Gefäß die Isocyanatkomponente ebenfalls auf 20°C temperiert. Anschließend wurde die erforderliche Menge der Isocyanatkomponente in die Mischung aus Polyolformulierung und Treibmittel gegeben und alles für 6 Sekunden intensiv miteinander vermischt. Nun wurde das Reaktionsgemisch in ein Testpäckchen (20 × 20 cm$^2$) ausgegossen und die Reaktivitätskennzahlen wie folgt bestimmt:

Die Startzeit entspricht der Zeit, die das Reaktionsgemisch braucht bis es beginnt aufzuschäumen. Für die Abbindezeit wurde ein Holzstab in den aufsteigenden Schaum getaucht und wieder herausgezogen. Der Zeitpunkt, an dem beim Herausziehen des Holzstabes der Schaum Fäden zieht, entspricht der Abbindezeit des Schaumes.

Zur Untersuchung der Fließeigenschaften der Schäume wurde das Reaktionsgefäß nach dem Rührvorgang mit einer für diese Methode normierten Menge des Reaktionsgemisches (265 g) in ein beheizbares Steigrohr (HSR, Hartschaumsteigrohr) mit der Höhe von 150 cm und dem Innendurchmesser von 9,1 cm eingebracht. Die Temperatur des Steigrohrs lag bei 35 °C. Die Steighöhe und der Druck wurden in Abhängigkeit der Zeit detektiert und gemäß des jeweils vorherrschenden Luftdrucks auf einen Standarddruck von 1013 mbar korrigiert. Der Zeitpunkt, an dem ein plötzlicher Druckanstieg detektiert wird, entspricht dem Gelpunkt bzw. der Gelzeit des Schaumes. Es sind folgende Größen zu unterscheiden: tG (Gelpunkt, in s) und hG (Höhe zum Zeitpunkt tG, in cm).

Zur Bestimmung der freien Rohdichte wurde wie oben beschrieben ein Schaum hergestellt und dieser anschließend für 24h bei Raumtemperatur gelagert. Aus dem Zentrum des Probekörpers wird ein $10 \times 10 \times 10$ cm$^3$ großer Würfel geschnitten. Die Masse des Prüfkörpers wird durch Wägen bestimmt und die Rohdichte durch den Quotienten aus Masse und Volumen berechnet und in kg/m$^3$ angegeben.

Für die Bestimmung des Quellverhaltens wurde das Polyurethan-Reaktionsgemisch in eine Form mit den Dimensionen $22 \times 22 \times 10$ cm$^3$ mit einer Überfüllung von 25% gegossen und nach der angegebenen Formstandzeit (FSZ) entformt. Nach 30 Minuten wurde die Dicke der Form bestimmt.

Die Druckfestigkeit wurde nach DIN EN 826 (2013) bestimmt. Hierzu wurde in eine Form von $22 \times 22 \times 10$ cm$^3$ so viel Polyurethan-Reaktionsgemisch gegossen, dass eine eingefüllte Rohdichte von 36 kg/m$^3$ erhalten wurde. Diese Form wurde nach der angegebenen Formstandzeit (FSZ) entformt. Nach 24h wurden 10 Probekörper der Dimension $5 \times 5 \times 5$ cm$^3$ geschnitten und jeweils von 5 Probekörpern die Druckfestigkeit in Dickenrichtung als auch Senkrecht dazu bestimmt.

Die Wärmeleitfähigkeit wurde nach DIN 52616 (1977) bestimmt. Hierzu wurde in eine Form von $22 \times 22 \times 6$ cm$^3$ das Polyurethan-Reaktionsgemisch mit einer Überfüllung von 10 % gegossen. Diese Form wurde nach 6 Minuten entformt. Nach wenigen Stunden wurde ein Probekörper der Dimension $20 \times 20 \times 3$ cm$^3$ geschnitten und die Wärmeleitfähigkeit entsprechend der Norm bestimmt.

Die Kernrohdichte wurde bestimmt nach DIN EN ISO 845:2009 ("Schaumstoffe aus Kautschuk und Kunststoffen - Bestimmung der Rohdichte").

**Tabelle 2:**

|  | 1* | 2 | 3 | 4* |
|---|---|---|---|---|
|  |  |  |  |  |
| Polyol PA | 32,50 | 32,50 | 32,50 | 32,50 |
| Polyol PB | 32,50 | 32,50 | 32,50 | 32,50 |
| Polyol PC | 30,00 | 30,00 | 30,00 | 30,00 |
| Polyol PD | 5,00 | 5,00 | 5,00 | 5,00 |
| Wasser | 2,65 | 2,65 | 2,65 | 2,65 |
| Stabilisator | 2,00 | 2,00 | 2,00 | 2,00 |
| Katalysator KA | 0,60 | 0,60 | 0,60 | 0,60 |
| Katalysator KB | 0,50 | 0,50 | 0,50 | 0,50 |
| Katalysator KC | 0,40 | 0,40 | 0,40 | 0,40 |
| Katalysator KD | 0,85 | 0,80 | 0,85 | 0,74 |
|  |  |  |  |  |
| Pol yolformulierung | 100 | 100 | 100 | 100 |
| Cyclopentan | 14,5 | 15,0 | 16,0 | 15,0 |
| Isocyanat IA | 149,0 |  |  | 95,0 |
| Isocyanat IB |  | 152,0 |  |  |
| Isocyanat IC |  |  | 153,0 |  |
| Isocyanat ID |  |  |  | 56,0 |
| Kennzahl | 113 | 113 | 113 | 113 |
| Verarbeitbarkeit |  |  |  |  |
| Startzeit [s] | 9 | 9 | 9 | 9 |
| Abbindezeit [s] | 61 | 59 | 60 | 58 |
| Gelzeit tG [s] | 64 | 63 | 65 | 64 |
| Fließhöhe bei tG (1013 hPA) [cm] | 118,4 | 118,1 | 118,3 | 117 |

(fortgesetzt)

| Schaumeigenschaften | | | | |
|---|---|---|---|---|
| Freie Rohdichte [g/l] | 23,3 | 23,3 | 22,4 | 23 |
| Druckfestigkeit 36 kg/m$^3$ [kPa] | 144 $\pm$ 18 | 147 $\pm$ 24 | 152 $\pm$ 27 | 142 $\pm$ 18 |
| Kernrohdichte 36 kg/m$^3$ | 32,2 $\pm$ 0,3 | 32,6 $\pm$ 0,4 | 31,9 $\pm$ 0,3 | 32,2 $\pm$ 0,3 |
| Wärmeleitfähigkeit [mW/mK] 10°C | 20,0 | 19,5 | 19,4 | 19,8 |
| Quellverhalten, FSZ 5 min (10 cm) [mm] | 1,4 | 0,6 | 1,2 | 1,4 |
| * Vergleichsbeispiele | | | | |

Die Versuche zeigen, dass mit der erfindungsgemäßen Kombination aus Polyolen und Isocyanaten bei gleicher guter Verarbeitbarkeit im diskontinuierlichen Verfahren PUR/PIR - Hartschäume erhalten werden können, welche über eine geringe Wärmeleitfähigkeit und ein besseres Quellverhalten verfügen als bei Einsatz von polymerem MDI in einem anderem Viskositätsbereich. Die geringeren Werte für das Quellverhalten zeigen, dass die Formkörper aus den erfindungsgemäßen Polyurethan-Hartschaumstoffen nach einer kürzeren Zeit entformt werden können.

**Versuche 11 - 14 (Tabelle 3):**

Analog den Versuchen 7 - 10 wurden weitere Polyurethan-Schäume 11 - 14 hergestellt und ausgeprüft (siehe Tabelle 3), die sich in der Zusammensetzung der Polyolformulierung unterscheiden. Die Schäume 11 und 12* wurden mit Cyclopentan, die Schäume 13 und 14* mit n-Pentan getrieben.

Die Vergleichsversuche 12* und 14* enthalten ein Polyolsystem, welches in seiner Zusammensetzung Systemen aus dem Stand der Technik (US2012/0264842) entspricht.

**Tabelle 3:**

| | 11 | 12* | 13 | 14* |
|---|---|---|---|---|
| | | | | |
| **Polyolformulierung (Gewichtsteile)** | 1 | 2 | 3 | 4 |
| Polyol PA | - | - | - | - |
| Polyol PB | 65,00 | 54,80 | 65,00 | 54,80 |
| Polyol PC | 30,00 | 19,40 | 30,00 | 19,40 |
| Polyol PD | 5,00 | 25,80 | 5,00 | 25,80 |
| Wasser | 2,65 | 2,65 | 2,65 | 2,65 |
| Stabilisator | 2,00 | 2,00 | 2,00 | 2,00 |
| Katalysator KA | 0,60 | 0,60 | 0,60 | 0,60 |
| Katalysator KB | 0,50 | 0,50 | 0,50 | 0,50 |
| Katalysator KC | 0,40 | 0,40 | 0,40 | 0,40 |
| Katalysator KD | 0,85 | 0,85 | 0,85 | 0,85 |
| | | | | |
| **Reaktionssystem ( Gewichtsteile)** | | | | |
| Pol yolformulierung | 100,0 | 100,0 | 100,0 | 100,0 |
| Cyclopentan | 14,5 | 14,5 | | |
| n-Pentan | | | 13,5 | 13,5 |
| Isocyanat IB | 153,0 | 135,0 | 153,0 | 135,0 |
| Kennzahl | 113 | 113 | 113 | 113 |

(fortgesetzt)

| Reaktionssystem ( Gewichtsteile) | | | | |
|---|---|---|---|---|
| | | | | |
| **Verarbeitbarkeit** | | | | |
| Startzeit [s] | 9 | 9 | 7 | 7 |
| Abbindezeit [s] | 61 | 61 | 65 | 68 |
| Gelzeit tG [s] | 63 | 68 | 71 | 75 |
| Fließhöhe bei tG (1013 hPa) [cm] | 115,1 | 121,3 | 116,1 | 122,7 |
| | | | | |
| **Schaum eigenschaften** | | | | |
| Freie Rohdichte [g/l] | 23,7 | 22,2 | 24 | 22,8 |
| Druckfestigkeit 36 kg/m$^3$ [kPa] | 189 $\pm$ 20 | 147 $\pm$ 17 | 183 $\pm$ 16 | 162 $\pm$ 15 |
| Kernrohdichte 36 kg/m$^3$ | 31,6 $\pm$ 0,4 | 30,7 $\pm$ 0,3 | 31,9 $\pm$ 0,4 | 31,2 $\pm$ 0,3 |
| Wärmeleitfähigkeit [mW/mK] 10°C | 19,1 | 19,8 | 21 | 21,3 |
| Quellverhalten, FSZ 5 min (10 cm) [mm] | 0,1 | 1,6 | 0,2 | 0,8 |
| Quellverhalten, FSZ 4 min (10 cm) [mm] | 1 | 2,3 | 1,1 | 1,6 |

Die Ergebnisse zeigen, dass die erfindungsgemäßen Schäume in allen gezeigten Eigenschaften deutlich besser sind als die Vergleichsversuche mit einer nicht erfindungsgemäßen Polyolformulierung aus dem Stand der Technik.

**Patentansprüche**

1. Polyurethan-Hartschaumstoffe erhältlich durch Umsetzung eines schaumbildenden Reaktionsgemisches aus

einer gegenüber Isocyanatgruppen reaktive Wasserstoffatome enthaltenden Komponente A), umfassend eine Polyolkomponente A1), Wasser A2) sowie gegebenenfalls Stabilisatoren A3), Katalysatoren A4) und sonstige Hilfs- und Zusatzmittel A5),
und wenigstens einem physikalisches Treibmittel T),
und einer Polyisocyanatkomponente B),
**dadurch gekennzeichnet, dass**
die Polyolkomponente A1) die folgenden Komponenten(i) - (iii) (bezogen auf das Gesamtgewicht der Komponente A1), umfasst

(i) 60 - 75 Gew.-% Polyetherpolyol A1a) mit einer Hydroxylzahl von 300 mg KOH/g bis 600 mg KOH/g und einer Funktionalität von 3,0 bis 6,0, welches erhältlich ist durch Addition eines Epoxids an eine oder mehrere Starterverbindung(en) ausgewählt aus der Gruppe bestehend aus Kohlenhydraten und di- oder höherfunktionellen Alkoholen;
(ii) 20 - 35 Gew.-% Polyetherpolyol A1b) mit einer Hydroxylzahl von 100 mg KOH/g bis 550 mg KOH/g und einer Funktionalität von 1,5 bis 5,0, welches erhältlich ist durch Addition eines Epoxids oder Epoxidgemischs an ein aromatisches Amin; und
(iii) 3 - 10 Gew.-% Polyetherpolyol A1c) mit einer Hydroxylzahl von 15 mg KOH/g bis < 300 mg KOH/g und mit einer Funktionalität von 1,5 bis 4,0, welches erhältlich ist durch Addition eines Epoxids oder Epoxidgemischs an eine oder mehrere Starterverbindung(en) ausgewählt aus der Gruppe bestehend aus Kohlenhydraten und di- oder höherfunktionellen Alkoholen,

und dass die Polyisocyanatkomponente B) mindestens 85 Gew.-% (bezogen auf das Gesamtgewicht von B) polymeres MDI mit einem NCO-Gehalt von $\geq$ 29,0 Gew.-% bis $\leq$ 32,0 Gew.% und einer Viskosität bei 25°C (EN ISO 3219, Oktober 1994) von $\geq$ 300 mPas bis $\leq$ 750 mPa·s enthält, welches, bezogen auf sein Gesamtgewicht, zu $\geq$ 25 Gew.-% bis $\leq$ 40 Gew.-% aus monomerem MDI besteht.

**2.** Polyurethan-Hartschaumstoffe nach Anspruch 1, **dadurch gekennzeichnet, dass** das Polyetherpolyol A1a) durch Addition eines Epoxids oder Epoxidgemischs aus Ethylenoxid und Propylenoxid, bevorzugt Propylenoxid, an eine oder mehrere Starterverbindung(en) ausgewählt aus der Gruppe bestehend aus Mischungen aus Saccharose und Propylenglykol, Mischungen aus Saccharose und Ethylenglykol, Mischungen aus Saccharose, Propylenglykol und Ethylenglykol, Mischungen aus Saccharose und Glycerin, Mischungen aus Sorbit und Propylenglykol, Mischungen aus Sorbit und Ethylenglykol, Mischungen aus Sorbit, Propylenglykol und Ethylenglykol, Mischung aus Sorbit und Glyzerin, erhältlich ist.

**3.** Polyurethan-Hartschaumstoffe nach Anspruch 1 oder 2, **dadurch gekennzeichnet, dass** das Polyetherpolyol A1b) ein auf ortho-, meta- oder para-Toluylendiamin oder einem Gemisch der isomeren Toluylendiamine gestartetes Polyetherpolyol ist.

**4.** Polyurethan-Hartschaumstoffe nach einem der Ansprüche 1 - 3, **dadurch gekennzeichnet, dass** das Polyetherpolyol A1c) ein auf Glycerin, Mischungen aus Glycerin und Propylenglykol, Trimethylolpropan, Mischungen aus Trimethylolpropan und Propylenglykol, oder Propylenglykol gestartetes Polyetherpolyol ist.

**5.** Polyurethan-Hartschaumstoffe nach einem der Ansprüche 1 - 4, bei der die Komponente A) ≥ 1,5 Gew.-% Wasser A2) enthält.

**6.** Polyurethan-Hartschaumstoffe nach einem der Ansprüche 1 - 4, bei der die Komponente A) ≥ 1,5 Gew.-% Wasser A2) und 0,5 - 5 Gew.-% eines Stabilisators A3) ausgewählt aus der Gruppe der Polyether-Polydimethylsiloxan-Copolymeren enthält.

**7.** Polyurethan-Hartschaumstoffe nach einem der Ansprüche 1 - 6, **dadurch gekennzeichnet, dass** das polymere MDI eine Viskosität bei 25°C (EN ISO 3219, Oktober 1994) von 350 - 500 mPa·s (EN ISO 3219, Oktober 1994) aufweist.

**8.** Polyurethan-Hartschaumstoffe nach einem der Ansprüche 1 - 7, zusätzlich enthaltend einen Katalysator **A4** ausgewählt aus der Gruppe bestehend aus

Triethylendiamin, N,N-Dimethylcyclohexylamin, Dicyclohexylmethylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydro-triazin, Tris-(dimethylaminopropyl)amin, Tris(dimethylaminomethyl)phenol, Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, Natrium-N-[(2-hydroxy-5-nonylphenyl)methyl]-N-methylaminoacetat, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin und Dimethylethanolamin.

**9.** Verfahren zur Herstellung von Formkörpern aus PUR-Hartschaumstoffen gemäß einem der Ansprüche 1 - 8, umfassend die Schritte:

a) Bereitstellen einer Form und
b) Einbringen des schaumbildenden Reaktionsgemisches aus Komponente A), Polyisocyanatkomponente B) und Treibmittel T) in die Form und
c) Aufschäumen des Reaktionsgemisches.

**10.** Verfahren gemäß Anspruch 9, wobei das schaumbildende Reaktionsgemisch unter variablem Injektionsdruck und / oder in zeitlich veränderlicher Menge in die Form eingebracht wird.

**11.** Verfahren gemäß Anspruch 10, wobei Schritt b) und / oder Schritt c) unter Vakuum durchgeführt werden.

**12.** Verfahren nach einem der Ansprüche 11, bei dem die Umsetzung der Isocyanatkomponente B) mit dem Polyol bei Kennzahlen von 100 bis 150 durchgeführt wird.

**13.** Verbundsystem enthaltend einen Polyurethan-Hartschaum gemäß einem der Ansprüche 1 - 8.

**14.** Verwendung eines Verbundsystems gemäß Anspruch 13 als Isoliermaterial, insbesondere für die Anwendung in Gefriersystemen.

**Claims**

1.  Rigid polyurethane foams obtainable by reaction of a foam-forming reaction mixture comprising

    a component A) containing hydrogen atoms which are reactive toward isocyanate groups and comprising a polyol component A1), water A2) and optionally stabilizers A3), catalysts A4) and other auxiliaries and additives A5)
    and at least one physical blowing agent T)
    and a polyisocyanate component B),
    **characterized in that**
    the polyol component A1) comprises the following components (i)-(iii) (based on the total weight of the component A1)

    (i) 60-75% by weight of polyether polyol A1a) having a hydroxyl number of from 300 mg KOH/g to 600 mg KOH/g and a functionality of from 3.0 to 6.0, which is obtainable by addition of an epoxide onto one or more starter compound(s) selected from the group consisting of carbohydrates and bifunctional or higher-functional alcohols;
    (ii) 20-35% by weight of polyether polyol A1b) having a hydroxyl number of from 100 mg KOH/g to 550 mg KOH/g and a functionality of from 1.5 to 5.0, which is obtainable by addition of an epoxide or epoxide mixture onto an aromatic amine; and
    (iii) 3-10% by weight of polyether polyol A1c) having a hydroxyl number of from 15 mg KOH/g to < 300 mg KOH/g and having a functionality of from 1.5 to 4.0, which is obtainable by addition of an epoxide or epoxide mixture onto one or more starter compound(s) selected from the group consisting of carbohydrates and bifunctional or higher-functional alcohols,

    and **in that** the polyisocyanate component B) contains at least 85% by weight (based on the total weight of B) of polymeric MDI which has an NCO content of from ≥ 29.0% by weight to ≤ 32.0% by weight and a viscosity at 25°C (EN ISO 3219, October 1994) of from ≥ 300 mPas to ≤ 750 mPa·s and comprises, based on its total weight, from ≥ 25% by weight to ≤ 40% by weight of monomeric MDI.

2.  Rigid polyurethane foams according to Claim 1, **characterized in that** the polyether polyol A1a) is obtainable by addition of an epoxide or epoxide mixture of ethylene oxide and propylene oxide, preferably propylene oxide, onto one or more starter compound(s) selected from the group consisting of mixtures of sucrose and propylene glycol, mixtures of sucrose and ethylene glycol, mixtures of sucrose, propylene glycol and ethylene glycol, mixtures of sucrose and glycerol, mixtures of sorbitol and propylene glycol, mixtures of sorbitol and ethylene glycol, mixtures of sorbitol, propylene glycol and ethylene glycol, mixture of sorbitol and glycerol.

3.  Rigid polyurethane foams according to Claim 1 or 2, **characterized in that** the polyether polyol A1b) is a polyether polyol started on ortho-, meta- or para-toluenediamine or a mixture of the isomeric toluenediamines.

4.  Rigid polyurethane foams according to any of Claims 1-3, **characterized in that** the polyether polyol A1c) is a polyether polyol started on glycerol, mixtures of glycerol and propylene glycol, trimethylolpropane, mixtures of trimethylolpropane and propylene glycol, or propylene glycol.

5.  Rigid polyurethane foams according to any of Claims 1-4, wherein the component A) contains ≥ 1.5% by weight of water A2).

6.  Rigid polyurethane foams according to any of Claims 1-4, wherein the component A) contains ≥ 1.5% by weight of water A2) and 0.5-5% by weight of a stabilizer A3) selected from the group consisting of polyether-polydimethylsiloxane copolymers.

7.  Rigid polyurethane foams according to any of Claims 1-6, **characterized in that** the polymeric MDI has a viscosity at 25°C (EN ISO 3219, October 1994) of 350-500 mPa·s (EN ISO 3219, October 1994).

8.  Rigid polyurethane foams according to any of Claims 1-7, additionally containing a catalyst A4 selected from the group consisting of triethylenediamine, N,N-dimethylcyclohexylamine, dicyclohexylmethylamine, tetramethylenediamine, 1-methyl-4-dimethylaminoethylpiperazine, triethylamine, tributylamine, dimethylbenzylamine, N,N',N"-tris(dimethylaminopropyl)hexahydrotriazine, tris(dimethylaminopropyl)amine, tris(dimethylaminomethyl)phenol, dimethylaminopropylformamide, N,N,N',N'-tetramethylethylenediamine, N,N,N',N'-tetramethylbutanediamine, tetramethylhexanediamine, pentamethyldiethylenetriamine, pentamethyldipropylenetriamine, tetramethyldiaminoethyl ether, dimethylpiperazine, 1,2-dimethylimidazole, 1-azabicyclo[3.3.0]octane, bis(dimethylaminopropyl)urea, N-methylmorpholine, N-ethylmorpholine, sodium N-[(2-hydroxy-5-nonylphenyl)methyl]-N-methylaminoacetate, N-cyclohexylmorpholine, 2,3-dimethyl-3,4,5,6-tetrahydropyrimidine, triethanolamine, diethanolamine, triisopropanolamine, N-methyldiethanolamine, N-ethyldiethanolamine and dimethylethanolamine.

9. Process for producing shaped bodies composed of rigid PUR foams according to any of Claims 1-8, comprising the steps:

    a) provision of a mold and
    b) introduction of the foam-forming reaction mixture composed of component A), polyisocyanate component B) and blowing agent T) into the mold and
    c) foaming of the reaction mixture.

10. Process according to Claim 9, wherein the foam-forming reaction mixture is introduced into the mold under a variable injection pressure and/or in an amount which changes over time.

11. Process according to Claim 10, wherein step b) and/or step c) are carried out under reduced pressure.

12. Process according to any of Claims 11, wherein the reaction of the isocyanate component B) with the polyol is carried out at an index of from 100 to 150.

13. Composite system containing a rigid polyurethane foam according to any of Claims 1-8.

14. Use of a composite system according to Claim 13 as insulation material, in particular for use in freezer systems.

**Revendications**

1. Mousses dures de polyuréthane pouvant être obtenues par transformation d'un mélange réactionnel formant une mousse constitué par

    - un composant A) contenant des atomes d'hydrogène réactif par rapport à des groupes isocyanate, comprenant un composant polyol A1), de l'eau A2) ainsi que le cas échéant des stabilisants A3), des catalyseurs A4) et d'autres adjuvants et additifs A5),
    - au moins un agent gonflant physique T)
    - et un composant polyisocyanate B),
    **caractérisées**
    **en ce que** le composant polyol A1) comprend les composants suivants (i)-(iii) (par rapport au poids total du composant Al),

    (i) 60-75% en poids d'un polyétherpolyol A1a) présentant un indice d'hydroxyle de 300 mg de KOH/g à 600 mg de KOH/g et une fonctionnalité de 3,0 à 6,0, qui peut être obtenu par addition d'un époxyde sur un ou plusieurs composés de départ choisis dans le groupe constitué par les hydrates de carbone et les alcools bifonctionnels ou à fonctionnalité supérieure ;
    (ii) 20-35% en poids d'un polyétherpolyol A1b) présentant un indice d'hydroxyle de 100 mg de KOH/g à 550 mg de KOH/g et une fonctionnalité de 1,5 à 5,0, qui peut être obtenu par addition d'un époxyde ou d'un mélange d'époxydes sur une amine aromatique ; et
    (iii) 3-10% en poids d'un polyétherpolyol A1c) présentant un indice d'hydroxyle de 15 mg de KOH/g à < 300 mg de KOH/g et une fonctionnalité de 1,5 à 4,0, qui peut être obtenu par addition d'un époxyde ou d'un mélange d'époxydes sur un ou plusieurs composés de départ choisis dans le groupe constitué par les hydrates de carbone et les alcools bifonctionnels ou à fonctionnalité supérieure ;

    et **en ce que** le composant polyisocyanate B) contient au moins 85% en poids (par rapport au poids total de B) de MDI polymère présentant une teneur en NCO de ≥ 29,0% en poids à ≤ 32,0% en poids et une viscosité à 25°C (EN ISO 3219, octobre 1994) de ≥ 300 mPa.s à ≤ 750 mPa.s, qui, par rapport à son poids total, est constitué à raison de ≥ 25% en poids à ≤ 40% en poids, de MDI monomère.

2.  Mousses dures de polyuréthane selon la revendication 1, **caractérisées en ce que** le polyétherpolyol A1a) peut être obtenu par addition d'un époxyde ou d'un mélange d'époxydes constitué par de l'oxyde d'éthylène et de l'oxyde de propylène, de préférence de l'oxyde de propylène, sur un ou plusieurs composés de départ, choisis dans le groupe constitué par les mélanges de saccharose et de propylèneglycol, les mélanges de saccharose et d'éthylèneglycol, les mélanges de saccharose, de propylèneglycol et d'éthylèneglycol, les mélanges de saccharose et de glycérol, les mélanges de sorbitol et de propylèneglycol, les mélanges de sorbitol et d'éthylèneglycol, les mélanges de sorbitol, de propylèneglycol et d'éthylèneglycol, les mélanges de sorbitol et de glycérol.

3.  Mousses dures de polyuréthane selon la revendication 1 ou 2, **caractérisées en ce que** le polyétherpolyol A1b) est un polyétherpolyol initié sur de l'ortho-toluylènediamine, de la méta-toluylènediamine ou de la para-toluylènediamine ou un mélange des toluylènediamines isomères.

4.  Mousses dures de polyuréthane selon l'une quelconque des revendications 1-3, **caractérisées en ce que** le polyétherpolyol A1c) est un polyétherpolyol initié sur du glycérol, des mélanges de glycérol et de propylèneglycol, du triméthylolpropane, des mélanges de triméthylolpropane et de propylèneglycol ou du propylèneglycol.

5.  Mousses dures de polyuréthane selon l'une quelconque des revendications 1-4, dans lesquelles le composant A) contient ≥ 1,5% en poids d'eau A2).

6.  Mousses dures de polyuréthane selon l'une quelconque des revendications 1-4, dans lesquelles le composant A) contient ≥ 1,5% en poids d'eau A2) et 0,5-5% en poids d'un stabilisant A3) choisi dans le groupe des copolymères de polyéther-polydiméthylsiloxane.

7.  Mousses dures de polyuréthane selon l'une quelconque des revendications 1-6, **caractérisées en ce que** le MDI polymère présente une viscosité à 25°C (EN ISO 3219, octobre 1994) de 350-500 mPa.s (EN ISO 3219, octobre 1994) .

8.  Mousses dures de polyuréthane selon l'une quelconque des revendications 1-7, contenant en plus un catalyseur A4 choisi dans le groupe constitué par

- la triéthylènediamine, la N,N-diméthylcyclohexylamine, la dicyclohexylméthylamine, la tétraméthylènediamine, la 1-méthyl-4-diméthylaminoéthylpipéraziné, la triéthylamine, la tributylamine, la diméthylbenzylamine, la N,N',N"-tris-(diméthylaminopropyl)hexahydrotriazine, la tris-(diméthylaminopropyl)amine, le tris(diméthylaminométhyl)phénol, le diméthylaminopropylformamide, la N,N,N',N'-tétraméthyléthylènediamine, la N,N,N',N'-tétraméthylbutanediamine, la tétraméthylhexanediamine, la pentaméthyldiéthylènetriamine, la pentaméthyldipropylènetriamine, le tétraméthyldiaminoéthyléther, la diméthylpipérazine, le 1,2-diméthylimidazole, le 1-azabicyclo[3,3,0]octane, la bis-(diméthylaminopropyl)-urée, la N-méthylmorpholine, la N-éthylmorpholine, le N-[(2-hydroxy-5-nonylphényl)méthyl]-N-méthylaminoacétate sodique, la N-cyclohexylmorpholine, la 2,3-diméthyl-3,4,5,6-tétrahydropyrimidine, la triéthanolamine, la diéthanolamine, la triisopropanolamine, la N-méthyldiéthanolamine, la N-éthyldiéthanolamine et la diméthyléthanolamine.

9.  Procédé pour la préparation de corps façonnés en mousses dures de PUR selon l'une quelconque des revendications 1-8, comprenant les étapes :

a) mise à disposition d'un moule et
b) introduction du mélange réactionnel formant une mousse constitué par le composant A), le composant polyisocyanate B) et l'agent gonflant T) dans le moule et
c) moussage du mélange réactionnel.

10. Procédé selon la revendication 9, le mélange réactionnel formant une mousse étant introduit dans le moule sous une pression d'injection variable et/ou en une quantité variable dans le temps.

11. Procédé selon la revendication 10, l'étape b) et/ou l'étape c) étant réalisée(s) sous vide.

**12.** Procédé selon la revendication 11, dans lequel la transformation du composant isocyanate B) avec le polyol est réalisée à des indices de 100 à 150.

**13.** Système composite contenant une mousse dure de polyuréthane selon l'une quelconque des revendications 1-8.

**14.** Utilisation d'un système composite selon la revendication 13 en tant que matériau d'isolation, en particulier pour l'utilisation dans des systèmes de congélation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006037540 A
- US 20120264842 A
- EP 2046861 A1
- EP 2148156 A
- EP 2844394 A